# FASCICULE DE BREVET EUROPEEN

(11) **EP 2 760 694 B1**
(45) Date de publication et mention de la délivrance du brevet: **08.11.2017**
(21) Numéro de dépôt: 12773089.3
(22) Date de dépôt: 26.09.2012
(51) Int. Cl.: B60L 5/20

(54) **TRANSMISSION DE COURANT ÉLECTRIQUE PAR UN CONTACT GLISSANT**
ÜBERTRAGUNG EINES ELEKTRISCHEN STROMES ÜBER EINEN GLEITKONTAKT
TRANSMISSION OF AN ELECTRICAL CURRENT VIA A SLIDING CONTACT

(30) Priorité: 26.09.2011 FR 1158554
(43) Date de publication de la demande: 06.08.2014
(73) Titulaire: Mersen France Amiens SAS, 80080 Amiens (FR)
(72) Inventeur: FARDEL, Guillaume, Amiens, 80000 (FR)
(74) Mandataire: Largeau, Béatrice
(86) Numéro de dépôt international: PCT/FR2012/052157
(87) Numéro de publication internationale: WO 2013/045824

(56) Documents cités:
- DE-A1- 2 749 449
- DE-A1- 4 036 137
- DE-A1- 4 343 489
- FR-A- 620 048
- GB-A- 1 158 437
- US-A- 2 856 471

## Description

L'invention concerne la transmission de courant électrique entre deux éléments mobiles l'un par rapport à l'autre, par exemple un élément roulant et un fil de caténaire. L'invention peut ainsi trouver des applications dans le domaine du transport ferroviaire en particulier.

De nos jours, la transmission du courant est habituellement assurée par une bande en carbone frottant sur un élément alimenté en courant, par exemple un fil caténaire ou bien encore sur un rail. La bande de carbone peut ainsi être montée sur un pantographe afin de frotter sur le fil caténaire, ou bien sur un patin afin de frotter sur un rail. Ce rail peut être un troisième rail s'ajoutant aux deux rails en contact avec les roues de l'élément roulant.

Classiquement, la bande est maintenue dans un étrier qui assure un renfort mécanique et l'ensemble bande plus étrier est vissé à un support. L'étrier permet d'assurer la tenue mécanique de la bande de carbone et participe également à la fixation par vissage de cette bande de carbone sur un support. US2856471 divulgue un dispositif de transmission de courant électrique entre deux éléments mobiles l'un par rapport à l'autre, comprenant des moyens d'appui agencés pour plaquer contre un support une bande comprenant du carbone, ladite bande s'étendant suivant une direction longitudinale, et étant conçue pour frotter contre l'un desdits éléments de façon à transmettre du courant électrique, dans lequel les moyens d'appui sont conformés pour occuper une portion seulement de la longueur de la bande suivant la direction longitudinale. La demande WO2010/070246 décrit des systèmes de transmission de courant sans vissage de la bande de captation. Ceci permet de gagner du temps lors des remplacements de bandes, et de limiter le risque de fissure qui peut être associé au vissage de la bande. L'étrier comporte des moyens élastiques qui viennent plaquer la bande contre le fond de l'étrier.

Il existe un besoin pour une maintenance plus simple.

Il est proposé un dispositif de transmission de courant électrique entre deux éléments mobiles l'un par rapport à l'autre, au moyen d'une bande comprenant du carbone, s'étendant suivant une direction longitudinale et conçue pour frotter contre l'un desdits éléments de façon à transmettre du courant électrique, ce dispositif de transmission comprenant un support de bande, des moyens d'appui agencés pour exercer sur la bande une force de plaquage contre le support, ladite force étant avantageusement transversale par rapport à ladite direction longitudinale, dans lequel les moyens d'appui et/ou le support sont conformés pour occuper une portion seulement de la longueur de la bande suivant la direction longitudinale; dans lequel les moyens d'appui et/ou le support sont conformés pour occuper une portion seulement de la longueur de la bande suivant la direction longitudinale, et les moyens d'appui sont agencés de façon à pouvoir passer d'un état fermé dans lequel les moyens d'appui plaquent la bande contre le support, à un état ouvert permettant la dissociation d'avec la bande en vue du retrait ou de l'installation de la bande du/dans le dispositif de transmission de courant. Ainsi, des moyens d'appui ponctuels permettent de plaquer la bande contre un support ponctuel. Ce dispositif peut ainsi être dénué d'étrier.

L'absence d'étrier peut ainsi permettre de simplifier la fabrication et/ou la maintenance de ce dispositif. On évite en particulier l'installation de la bande dans un étrier sur toute sa longueur.

En outre, ce dispositif peut être relativement léger, du fait de l'absence d'étrier.

Ce dispositif peut être en outre plus robuste que les dispositifs de l'art antérieur dans lesquels, du fait de la présence d'un étrier, le courant capté est forcé de passer à travers la liaison entre la bande de carbone et l'étrier, au risque de générer des échauffements pouvant conduire à la déformation et à la rupture de l'ensemble.

Les moyens d'appui peuvent avantageusement exercer une force directement sur la bande, sans pièce intercalaire.

La force transversale exercée par les moyens d'appui peut avantageusement permettre de plaquer la bande directement contre le support, sans pièce intercalaire.

Le support peut avantageusement être réalisé en un matériau conducteur, afin d'assurer la transmission du courant électrique.

Avantageusement, le support est agencé pour permettre l'assemblage de la bande sur le dispositif.

Avantageusement, le support peut être conformé pour permettre une installation du dispositif de transmission sur un système existant par ailleurs, par exemple un pantographe du type connu de l'art antérieur. Par exemple le support peut être conformé pour une fixation sur une pièce reliant deux cornes de pantographe.

Le support contre lequel est plaquée la bande peut par exemple comprendre une pièce avec une partie plate s'étendant sur une portion seulement de la longueur de la bande, et deux extrémités conformées pour assurer la fixation à des cornes de pantographe.

Par « une portion seulement de la longueur de la bande», que ce soit au sujet des moyens d'appui ou du support, on entend 50% ou moins de la longueur, avantageusement 20% ou moins de la longueur de la bande, avantageusement 10% ou moins de la longueur de la bande, mais plus de 0,1% de la longueur de la bande. Par exemple, les moyens d'appui et/ou le support peuvent occuper entre 4 et 12% inclus de la longueur de la bande.

Avantageusement et de façon non limitative, le dispositif peut comprendre en outre la bande.

La bande peut avoir une longueur de 2000 millimètres ou moins typiquement 1200 millimètres ou moins, par exemple de 1000 millimètres, de 700 millimètres, ou moins, mais de manière générale la bande a une longueur selon sa direction longitudinale supérieure à 200 millimètres.

Avantageusement et de façon non limitative, la bande peut comporter des moyens de renfort mécanique de la bande. Ces moyens peuvent être réalisés en un ou plusieurs matériau(x) différents du matériau utilisé pour frotter contre l'élément afin de transmettre le courant. Ces moyens de renfort peuvent être solidarisés à la partie carbonée de la bande, c'est-à-dire que la partie carbonée de la bande et les moyens de renfort mécanique forment une bande d'une seule pièce et, de préférence, en des matériaux différents de sorte que les moyens de renfort sont manipulés en même temps que la partie carbonée de la bande. Lors de son installation (respectivement de son remplacement), la bande n'est donc pas installée sur (respectivement séparée de) ces moyens de renfort.

Ces moyens de renfort de la bande peuvent permettre d'assurer la tenue mécanique de la bande, en particulier la résistance aux chocs et aux déformations de la bande. Ainsi, les deux fonctions de l'étrier selon l'art antérieur, à savoir le renfort mécanique et la fixation au support sont assurés respectivement par ces moyens de renfort de la bande et par les moyens d'appui ponctuels.

Avantageusement et de façon non limitative, les moyens de renfort mécanique peuvent comprendre une ou plusieurs partie(s) réalisée(s) en matériau(x) composite(s). Certains matériaux composites peuvent en effet permettre d'allier légèreté et propriétés mécaniques satisfaisantes. En outre, la bande peut ainsi présenter une meilleure résistance en condition hivernale que dans l'art antérieur. En effet, une partie en matériau composite peut résister mieux aux chocs provoqués par la présence de glace sur la caténaire et aux arcs électriques dus à une rupture du contact électrique générés par le givre.

On peut aussi relever que l'utilisation d'un matériau composite pour la partie du renfort peut permettre d'augmenter la durée de bande.

Le renfort composite peut ainsi assurer les fonctions mécaniques de rigidification, de protection contre les chocs mécaniques et contre les arcs électriques.

Avantageusement et de façon non limitative, les moyens de renfort de bande peuvent en outre comprendre un élément de renfort central, par exemple une tige métallique, disposé à l'intérieur de la bande.

L'invention n'est bien entendu pas limitée à la présence d'un tel renfort central. La bande peut être constituée simplement d'une partie carbonée et d'une partie composite.

Avantageusement et de façon non limitative, au moins certains des moyens de renfort, et en particulier la ou les portion(s) en matériau(x) composite(s), peuvent être disposés sur le fond de la bande et/ou sur deux côtés latéraux de la bande.

Ceci peut permettre d'augmenter la durée de vie de la bande de captation grâce à l'optimisation de la quantité de matière composée, et de conférer une meilleure résistance mécanique à l'ensemble.

Les moyens de renfort mécaniques peuvent ne pas faire saillie par rapport au reste de la bande, c'est-à-dire qu'ils peuvent affleurer à la surface de la bande ou rester en-deçà. La bande peut ainsi être avantageusement positionnée sur le support de façon plus aisée ce qui favorise encore davantage la stabilité de l'ensemble.

Une telle géométrie peut ainsi permettre d'optimiser la consommation de matière au fur et à mesure de l'utilisation. Lorsque la pièce est usée, on peut ainsi limiter la quantité de matière jetée. On peut en outre relever que la face de la bande de captation destinée à frotter contre l'élément alimenté en courant peut faire partie de la partie de captation. Ainsi le fil de caténaire ne frotte pas sur une partie de renfort mécanique mais bien sur la partie de captation. Le courant est collecté directement sur la pièce en carbone ce qui limite les résistances de contact.

Avantageusement et de façon non limitative, le matériau composite peut comprendre des fibres de carbone, et/ou des fibres de verre. On pourra par exemple prévoir d'utiliser des fibres de carbone tressées puis densifiées par du carbone (composite C/C tel que décrit dans la demande FR 2 807 365) puis imprégnées de résine phénolique. On pourra également prévoir d'autres matériaux composites plus rapides à fabriquer, par exemple :
- des fibres de carbone ou de verre imprégnées par une résine thermodurcissable. Un tel composite est couramment pour des pièces destinées à l'aéronautique ou pour des isolants électriques ;
- un tissu de verre ou de carbone imprégné par une résine thermodurcissable.

Les moyens d'appui peuvent avantageusement être réalisés en un ou des matériaux résistant(s) à la corrosion et à l'arc électrique. Il est avantageux que ces matériaux soient légers. On pourra par exemple citer l'aluminium, les alliages d'aluminium, des matières plastiques, composites, ou autres.

Les moyens d'appui ponctuels peuvent être fixés par vissage à la bande et au support.

Avantageusement et de façon non limitative, les moyens d'appui peuvent être agencés de façon à pouvoir passer d'un état fermé dans lequel les moyens d'appui plaquent la bande contre le support, à un état ouvert en vue du retrait ou de l'installation de la bande du/dans le dispositif de transmission de courant. Ces deux états peuvent être stables, c'est-à-dire que lorsque les moyens d'appuis sont placés dans un état donné, ils restent dans cet état à moins d'une sollicitation extérieure pour les faire passer dans l'autre état.

Les moyens d'appui peuvent ainsi être susceptibles d'adopter un état permettant une dissociation d'avec la bande relativement facilement. Un tel état d'ouverture ou de dissociation permet de faciliter ainsi l'installation et/ou le retrait de la bande seulement. La maintenance est donc plus simple, et la fabrication moins coûteuse que dans l'art antérieur dans lequel l'étrier est remplacé avec la bande.

Avantageusement, les moyens d'appui sont agencés pour être maniés manuellement ou coopérer avec un outil maniable à la main pour passer de l'état fermé à l'état ouvert, et/ou réciproquement. Les moyens d'appui sont ainsi relativement faciles à manier.

Les moyens d'appui peuvent comprendre des moyens élastiques, par exemple des moyens ressort, ou non.

Par exemple, ces moyens ressort peuvent permettre d'appliquer une pression pour plaquer la bande contre le support, ou bien encore pour ouvrir les moyens d'appui après un déverrouillage en vue du retrait ou de l'installation de la bande.

Ces moyens ressort peuvent par exemple comprendre un ressort hélicoïdal, une lame ressort et/ou une partie en queue d'aronde, et/ou autre.

Dans le cas de moyens d'appui comprenant des lames ressort pour plaquer la bande, on peut prévoir une bande présentant des cavités destinées à recevoir ces lames ressort, afin que ces lames ressort exercent une pression sur l'un des côtés de la cavité de façon à plaquer la bande contre le support.

Les moyens d'appui peuvent par exemple comprendre une tige filetée. Par exemple une tige filetée reliée aux deux mors mobiles d'une mâchoire (ou bien à un mors fixe et à un mors mobile), peut permettre de serrer la bande en tournant cette tige. Les mors viennent exercer un appui sur la bande lorsque la tige filetée est tournée suffisamment, ces mâchoires ayant une forme en queue d'aronde, afin que les forces correspondant à l'appui aient une composante pour plaquer la bande contre le support. La tige filetée peut être tournée à la main, ou bien encore au moyen d'un outil simple apte à venir en prise avec la tige filetée, du type tournevis. Lorsque la tige filetée est tournée de façon à éloigner suffisamment les mors des cotés latéraux de la bande, il est relativement aisé de retirer la bande du reste du dispositif.

Les moyens d'appui peuvent avantageusement comprendre ou être apte à coopérer avec des moyens de verrouillage, par exemple du type sauterelle, excentrique, came ou bien encore excentrique à came, ces moyens de verrouillage permettant de passer de l'état fermé à l'état ouvert, et/ou réciproquement.

Avantageusement, les moyens d'appui peuvent être conçus pour rester solidarisés à un système de transmission du courant, du type pantographe ou patin par exemple, lors du remplacement de la bande.

L'invention n'est bien entendu pas limitée à cette solidarisation. On peut par exemple prévoir des moyens d'appui fixés à la bande par collage ou vissage par exemple, et comprenant une pièce du type came ou excentrique agencée pour pouvoir être tournée par un outil de façon à passer d'un état de plaquage de la bande à un état de relâchement. Un tel verrou quart de tour peut être manié relativement facilement. Lorsque cette pièce est dans un état de relâchement, on peut envisager de défaire la fixation des moyens d'appui afin de retirer la bande et d'en installer une nouvelle.

Avantageusement et de façon non limitative, les moyens d'appui peuvent comprendre deux mors conformés pour plaquer la bande contre le support. Ces mors pourront par exemple avoir une face légèrement oblique, une telle forme de queue d'aronde permettant le plaquage contre le fond du support.

Avantageusement et de façon non limitative, on pourra prévoir un excentrique pour la fermeture des mors et/ou pour l'ouverture des mors. En particulier on pourra prévoir un appui sur la bande au moyen d'un ressort et un relâchement au moyen d'un excentrique, ou inversement une fermeture au moyen d'un excentrique et une ouverture par un ressort.

Avantageusement et de façon non limitative on pourra prévoir un excentrique à cran d'arrêt.

Avantageusement et de façon non limitative, les moyens d'appui peuvent être compatibles avec le dispositif de détection d'usure et d'avarie décrit dans la publication EP0872374. Le support peut en effet être conformé de façon à définir une ou des cavités fermées lorsque la bande est plaquée sur ce support. Ces cavités peuvent être remplies de gaz, par exemple de l'air, sous pression. Lorsque la bande est usée, des capteurs de pression situés dans la tête du pantographe permettent de détecter la chute de pression dans la ou les cavités, et donc d'envoyer un signal d'alarme en vue du remplacement de la bande.

Les moyens d'appui peuvent ainsi assurer une connexion électrique et une étanchéité pneumatique.

Une telle cavité pressurisée peut éventuellement être ménagée dans la bande, par exemple entre la partie de captation et la partie de renfort, per exemple en insérant un tube de carbone creux. On peut faire circuler de l'air sous pression dans ce tube, les extrémités de ce tube pouvant être reliées à un système pneumatique permettant de détecter toute variation de pression de l'air. Lorsque la bande est usée ou suite à un choc, la tube se rompt et le changement de pression est détecté. On peut prévoir alors un abaissement automatique du pantographe par exemple afin de protéger la caténaire.

Avantageusement et de façon non limitative, le dispositif de transmission décrit ci-dessus est destiné à un système de pantographe, c'est-à-dire un système articulé destiné à être monté sur un toit d'une rame. Le système de pantographe peut comprendre une, deux ou davantage bande(s).

Bien entendu, l'invention peut aussi être appliquée à un système de patin pour la captation de courant à partir d'un rail alimenté en courant, ou à toute autre application appropriée.

Le dispositif de transmission peut ainsi comprendre ou faire partie d'un archet de pantographe.

L'invention peut ainsi trouver des applications dans le domaine du transport ferroviaire, métropolitain ou toute autre application impliquant une transmission de courant au moyen d'un contact glissant par exemple les frotteurs industriels.

Il est en outre proposé un outil, apte à coopérer avec le dispositif décrit ci-dessus, et en particulier avec les moyens d'appui.

L'outil peut coopérer avec les moyens d'appui lors d'un remplacement de bande.

L'outil peut avantageusement comprendre des moyens de verrouillage par exemple une sauterelle, une came, un excentrique, un excentrique à came, ou autre.

L'outil peut avantageusement être agencé de façon à faire passer les moyens d'appui de l'état ouvert à l'état fermé, et/ou réciproquement.

L'outil peut avantageusement comprendre une poignée, et l'outil peut avantageusement être conçu pour permettre le passage d'un état ouvert à un état fermé et/ou réciproquement, par simple(s) rotation(s) de la poignée, par exemple une ou plusieurs rotation(s) d'un quart de tour chacune.

Il est en outre proposé un procédé d'installation/ désinstallation d'une bande comprenant du carbone pour un dispositif de transmission de courant électrique entre deux éléments mobiles l'un par rapport à l'autre, ladite bande s'étendant suivant une direction longitudinale et étant conçue pour frotter contre l'un desdits éléments de façon à transmettre du courant électrique, le procédé comprenant une étape de retrait/positionnement par rapport à des moyens d'appui agencés pour exercer sur la bande une force de plaquage contre un support, ladite force étant transversale par rapport à la direction longitudinale, ledits moyens d'appui étant agencés de façon à pouvoir passer d'un état fermé dans lequel les moyens d'appui plaquent la bande contre le support, à un état ouvert permettant la dissociation d'avec la bande,dans lequel les moyens d'appui et le support sont conformés pour occuper une portion seulement de la longueur de la bande suivant la direction longitudinale. Le caractère ponctuel des moyens d'appui peut permettre d'éviter toutes les opérations d'insertion de la bande dans un étrier sur toute la longueur de la bande.

L'invention sera mieux comprise en référence aux figures ci-dessous, dans lesquelles :
- La figure 1 montre un exemple d'une partie d'un système de pantographe selon un mode de réalisation de l'invention.
- La figure 2A est une vue en perspective de moyens d'appui et d'une portion de bande, selon un mode de réalisation.
- La figure 2B est une vue en coupe de moyens d'appui et d'une portion de bande, selon un mode de réalisation.
- La figure 2C est une vue en perspective de moyens d'appui et d'une portion de bande, selon un mode de réalisation.
- La figure 2D est une vue en perspective pour illustrer le passage à un état d'ouverture de moyens d'appui, selon un mode de réalisation de l'invention.
- La figure 3A est une vue en perspective pour illustrer le passage à un état d'ouverture de moyens d'appui, selon un mode de réalisation de l'invention,
- La figure 3B est une vue ne perspective de l'outil de la figure 3A,
- Les figures 4A et 4B sont des vues en coupe, dans un plan de section de bande, illustrant très schématiquement un exemple d'appui ponctuel selon un autre mode de réalisation de l'invention.

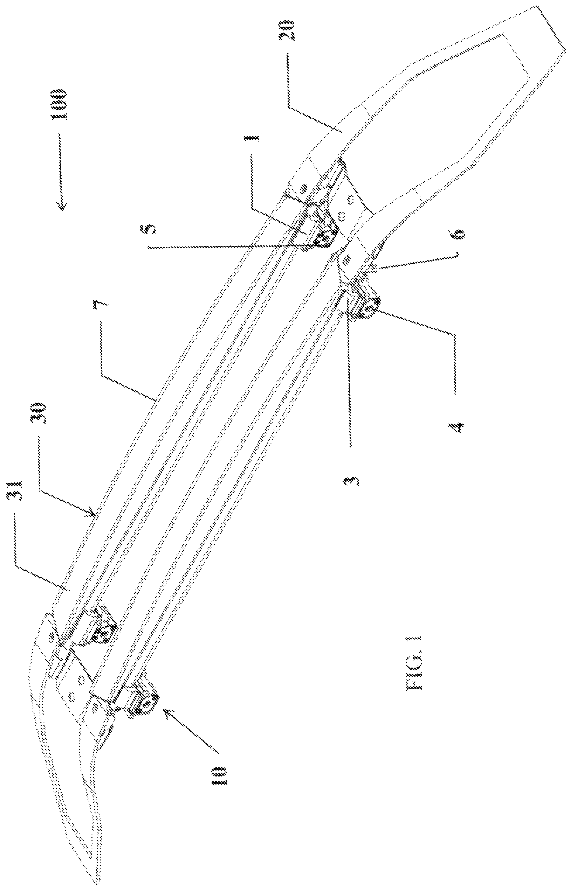

La figure 1 montre un dispositif de transmission de courant 100 sur un contact glissant, ici entre un élément roulant et un fil de caténaire.

Ce dispositif 100 comprend deux bandes 30 pour frotter sur le fil caténaire. Ces bandes 30 comprennent une partie de captation de courant à base de carbone, par exemple une bande de graphite 31, et une partie de renfort mécanique 7 de la bande 30.

Cette partie de renfort mécanique 7 est réalisée en un matériau composite. Cette partie de renfort 7 peut par exemple comprendre des fibres de carbone tressés puis densifiés par du carbone tel que décrit dans la demande FR2807365, puis imprégnée de résine phénolique.

Les bandes 30 sont fabriquées en surmoulant le composite sur trois cotés de la partie carbone 31. Des étapes de polymérisation, d'usinage de la bande surmoulée et de sablage/cuivrage des extrémités de la bande (ceci permettant d'améliorer le contact électrique) permettent d'obtenir la bande 30.

La partie de renfort de la bande 7 entoure la bande 31 sur trois de ses côtés, à savoir sur les côtés latéraux et sur le fond de la bande 31. Cette partie de renfort 7 permet d'assurer la résistance mécanique, notamment aux chocs ou aux déformations, de la bande 30.

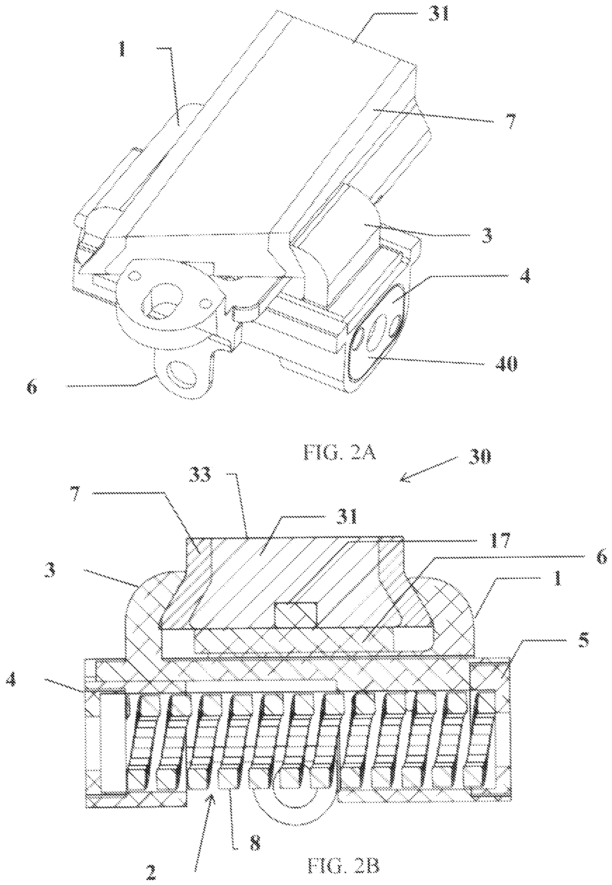

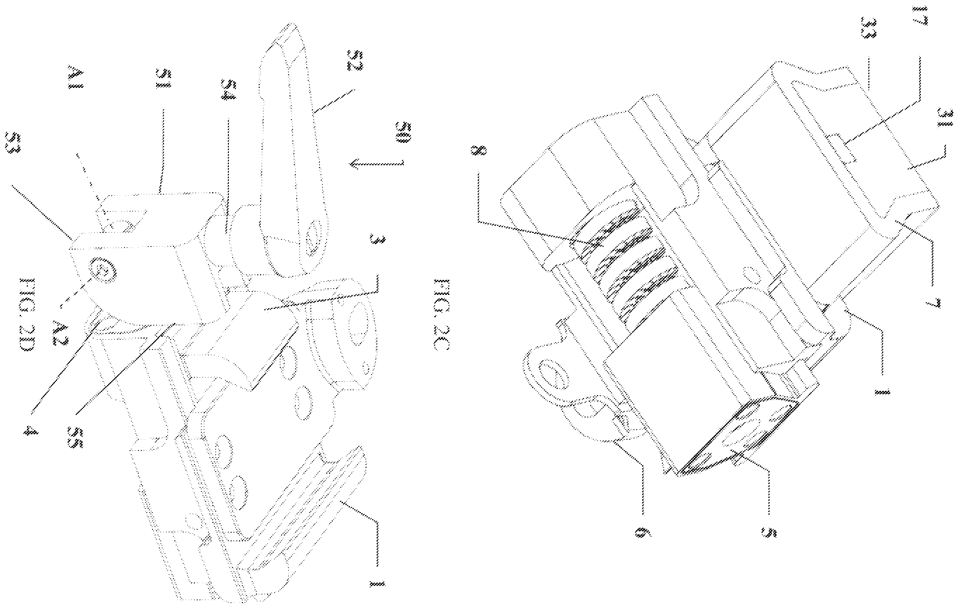

Pour chacune des bandes 30, le dispositif de transmission de courant 100 comporte en outre deux moyens d'appui 10. Ces moyens d'appui 10 comprennent deux mors 1, 3 aptes à venir appuyer contre la bande 30. La bande 30 a une section avec des côtés obliques et les mors 30 ont une surface d'appui adaptée à ces côtés obliques de sorte que lorsque les mors 1, 3 sont serrés contre la bande 30, une composante des forces d'appui des forces liées au serrage vient presser la bande 30 contre le support. Ces moyens d'appuis seront mieux compris en référence aux figures 2A, 2B, 2C et 2D.

Dans les modes de réalisation des figures 2A, 2B, 2C, la bande 30 comprend outre une partie de captation de courant 31 :
- une partie de renfort mécanique de la bande 7 en matériau composite et
- un élément de renfort 17 comprenant une tige métallique disposée à l'intérieur de la bande 30, ici, dans un évidement de la partie carbonée 31 sur la face opposée à la face de contact 33 destinée à frotter contre le fil de caténaire. L'élément de renfort central peut en particulier être collé à la partie de carbone 31. Cet élément de renfort 17 peut permettre de renforcer encore davantage la bande 30.

On peut relever que les bandes représentées sur la figure 2A et 2B correspondent à un mode de réalisation dans lequel la partie composite 7 n'est disposée que sur les côtés latéraux de la bande 30.

En revanche, dans le mode de réalisation de la figure 2C, la partie en matériau composite 7 est disposée sur les côtés latéraux et sur le fond de la partie carbonée 31.

En référence à ces figures 2A à 2D, les moyens d'appui comportent un mors fixe 1 et un mors mobile 3. Le mors mobile est apte à coulisser selon une direction transverse perpendiculaire à la direction longitudinale de la bande 30.

Le mors mobile 3 peut être pressé contre la bande 30, de sorte que les mors 1, 3 viennent appuyer la bande 30 contre un support, par exemple une pièce de liaison ou de contact 6.

Cette pièce de liaison de contact 6 s'étend sur une partie de la bande 30 maintenue plaquée dans la fixation. Cette pièce 6 est en métal conducteur, de préférence du cuivre, afin d'assurer une bonne liaison électrique.

Les extrémités de cette pièce de liaison 6 sont conformées pour fixer les cornes référencées 20 sur la figure 1. Les cornes 20 permettent d'éviter que le pantographe n'accroche le fil de caténaire, et permettent au fil de contact d'être amené sur les bandes d'usure. Les cornes 20 peuvent être réalisées en un matériau léger et résistant à la corrosion, comme l'aluminium.

Les moyens d'appui 10 comprennent des moyens élastiques, ici un ressort hélicoïdal 8. Ce ressort 8 permet d'exercer une contrainte sur un fond de mors mobile 5, ce fond de mors mobile 5 étant solidaire, éventuellement d'une seule pièce, avec le mors mobile 3. Les efforts de contrainte exercés par le ressort hélicoïdal 8 sont donc transférés au mors mobile 3.

Le ressort hélicoïdal 8 est maintenu dans un logement 2 entre le fond du mors mobile 5 et une pièce de fond de logement 4.

Les moyens d'appui représentés sur les figures à 2A à 2D sont agencés pour pouvoir adopter outre la position d'appui représentée sur les figures 2A, 2B, 2C, une position d'ouverture autorisant le retrait et l'installation d'une nouvelle bande 30.

La figure 2D illustre un exemple de passage à cet état de dissociation.

L'état de dissociation peut être obtenu en amenant le fond du mors mobile 5 en verrouillage dans une position plus rapprochée du fond du logement 4 que celle représentée sur la figure 2B.

Ceci peut être obtenu au moyen d'un outil 50 comprenant une tige (non visible sur la figure 2D) apte à entrer en prise avec cette pièce de fond de mors mobile 5, une poignée 52 pour une préhension manuelle et un excentrique 51 solidaire de la poignée et articulé à la tige.

Cette tige peut être introduite via la pièce de fond de logement 4, et donc avoir une section avec des dimensions légèrement inférieures à celles de l'orifice principal (référencé 40 sur la figure 2A) de cette pièce de fond de logement 4. La section de la tige peut par exemple être circulaire.

L'extrémité de la tige est conçue pour venir en prise avec le fond de mors mobile 5 après une rotation de par exemple 90° de l'outil autour de l'axe de la tige, cet axe étant perpendiculaire à la direction longitudinale de la bande 30. La tige et l'élément 5 sont ainsi conformés de façon à pouvoir rentrer en prise l'un avec l'autre après une rotation de 90°. L'homme du métier saura concevoir une tige et un élément avec des évidements et des excroissances appropriés pour permettre cette mise en prise.

Cette mise en prise est effectuée lorsque l'excentrique 51 est orienté avec sa face 53 en regard du fond du logement 4, c'est-à-dire que la partie cylindrique 54 s'étendant suivant l'axe de rotation de la poignée 52 est alors sensiblement alignée avec l'axe A1 de la tige. La poignée 52 est tournée de par exemple 90° autour de l'axe A1 de la tige, et l'extrémité de la tige vient alors coopérer avec le fond du mors mobile 5.La tige peut venir en prise avec la pièce 5, derrière cette pièce 5, c'est-à-dire que la mise en prise a lieu du côté extérieur au logement 2.

Une fois la tige de l'outil 50 en prise avec la pièce 5, il est alors possible de tirer cette pièce 5 au moyen de la tige, de façon à ouvrir la mâchoire constituée par les mors 1, 3.

Ceci peut avantageusement être effectué en effectuant une rotation de 90° de l'ensemble poignée 52 plus excentrique 51 autour d'un axe A2 parallèle à la direction longitudinale de la bande. L'excentrique 51 permet de transformer ce mouvement de rotation en un mouvement de translation de la tige.

L'excentrique 51 peut avoir une forme telle qu'une fois la rotation effectuée, l'excentrique 51 vienne reposer contre la pièce 4 sur une partie 55 de la surface de l'excentrique, assurant ainsi un verrouillage en position ouverte. Il est alors possible de retirer la bande usée et de replacer une nouvelle.

Un tel outil 50 peut ainsi permettre une maintenance bien plus rapide que dans l'art antérieur, dans lequel on se doit de dévisser l'ensemble bande plus étrier. Comme expliqué ci-dessus, il suffit en effet d'introduire la tige de l'outil 50 à l'intérieur du ressort hélicoïdal, de déverrouiller le cran d'arrêt de la fixation, d'effectuer un quart de tour pour venir en prise avec la pièce 5 et d'abaisser la poignée (ou levier) de l'outil pour ouvrir la mâchoire. On peut alors retirer la bande usagée, et placer une nouvelle bande, après d'être assuré de la propreté des faces d'appui de cette nouvelle bande. On remonte alors le levier : la fixation se ferme et le ressort agit sur le mors mobile qui comprime la bande. L'outil peut alors être retiré.

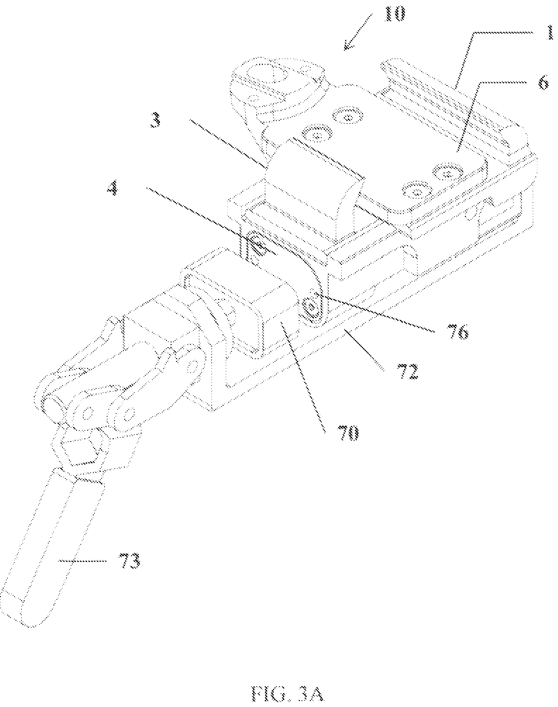

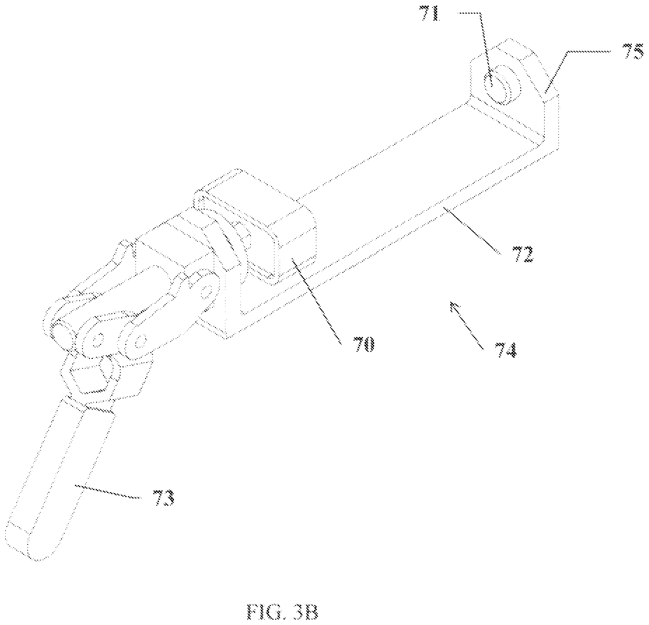

En référence au mode de réalisation des figures 3A et 3B, l'outil 74 représenté sur la figure 3B est apte à coopérer avec des moyens d'appui du type de celui représenté sur les figures 2A à 2D, avantageusement avec le même moyen d'appui.

Le moyen d'appui est destiné à être reçu entre un élément de fond fixe 75, fixe et éventuellement d'une seule pièce avec une pièce en U 72, et un élément de fond mobile 70.

L'élément de fond fixe 75 comporte un téton d'alignement 71, destiné à être reçu dans l'orifice principal de la pièce référencée 5 sur les figures 2A à 2D.

L'élément de fond mobile comporte deux pins d'alignement non représentées, destinées à être insérées dans les orifices 76 du fond du logement 4.

L'ensemble téton plus orifice principal de la pièce 5 permet ainsi un positionnement grossier du moyen d'appui, tandis que l'ensemble pins plus orifices 76 permet un positionnement plus fin.

L'élément de fond mobile 70 est solidarisé à une poignée 73, de sorte que lorsque cette poignée 73 est actionnée de bas en haut, l'élément de fond mobile est rapproché de l'élément de fond fixe 75. Si un moyen d'appui 10 est positionné dans l'outil 74, l'élément de fond mobile vient ainsi en butée contre la pièce 4. Cette pièce étant fixe, la force exercée par l'outil sur le moyen d'appui va déplacer la pièce 5 vers la pièce 4, en comprimant le ressort.

Le mors mobile 3 étant solidaire de la pièce 5, ce mors mobile est alors déplacé vers la poignée 73, et la bande peut être retirée et remplacée par une nouvelle bande.

On abaisse alors la poignée. L'élément de fond mobile 70 est alors ramené vers la poignée et se détache de la pièce 4. Du fait des efforts de compression exercés par le ressort, la pièce 5 reprend sa position initiale. Le ressort étant toujours en compression, les forces exercées par le ressort maintiennent les mors 1, 3 contre la bande (non représentée sur la figure 3A).

Les parois de la bande et les mors sont obliques, de sorte que la bande est plaquée contre le support 6.

L'invention n'est en rien limitée par des moyens d'appui comportant des mors pour enserrer la bande.

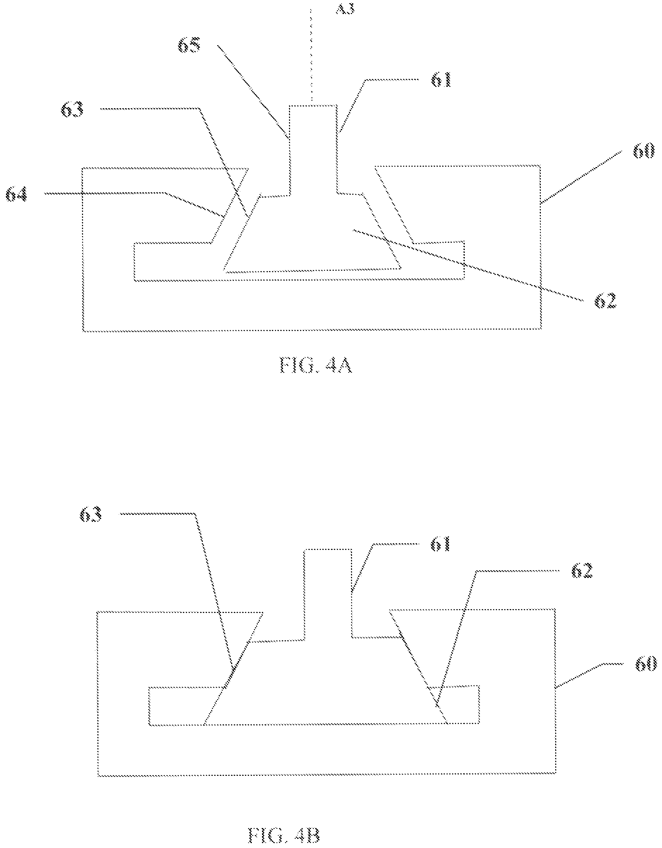

Par exemple, dans le mode de réalisation très schématiquement illustré par les figures 4A et 4B, on peut prévoir un logement 60 solidarisé au fond de la bande (non représentée), ce logement étant apte à recevoir une pièce de verrouillage 61, ou verrou quart de tour. Cette pièce de verrouillage comporte une partie came 62, de base ovale, et avec des parois latérales obliques 63, de sorte que les sections transversales de cette partie came ont une forme de trapèze. Le logement 60 comporte des parois obliques 64, destinées à entrer en contact avec les parois de la partie came lorsque cette partie came est en position de verrouillage. La partie came 62 exerce alors une force contre le logement 60 et donc contre la bande.

La partie came passe d'une position d'insertion, comme représenté sur la figure 4A, à la position de verrouillage de la figure 4B par rotation autour d'un axe A3. La pièce de verrouillage comporte une partie 65 apte à coopérer avec un outil. Cette partie 65 peut par exemple définir un évidement de section hexagonale, de sorte que la pièce de verrouillage 61 peut être entrainée en rotation par un outil comprenant une tige de section hexagonale. Du fait de la forme ovale de la partie came 62, les parois obliques 63, 64 de la partie came et du logement viennent alors en appui les unes contre les autres.

Les parois 63, 64 étant obliques, une force vient s'exercer contre la bande.

La partie 61 est partiellement logée dans un élément (non représenté) en contact avec un support non représenté. La force exercée par la pièce de verrouillage 61 vient plaquer la bande contre ce support.

La partie came peut avantageusement définir un évidement non représenté destiné à recevoir une pièce d'arrêt lorsque la pièce de verrouillage est dans la position de verrouillage. Des moyens de rappel du type ressort (non représentés) peuvent permettre d'enclencher la pièce d'arrêt dans l'évidement, bloquant ainsi la partie came en position de verrouillage.

Pour remplacer la bande, il convient d'abord de libérer la partie came, par exemple en exerçant une traction sur la pièce d'arrêt, puis de faire tourner la pièce de verrouillage d'un quart de tour, au moyen de l'outil à section hexagonale. La pièce de déverrouillage peut alors être retirée du logement.

## Revendications

1. Dispositif de transmission de courant électrique (100) entre deux éléments mobiles l'un par rapport à l'autre, au moyen d'une bande (30) comprenant du carbone, s'étendant suivant une direction longitudinale et conçue pour frotter contre l'un desdits éléments de façon à transmettre du courant électrique, ledit dispositif de transmission comprenant :
un support de bande (6),
des moyens d'appui (10) agencés pour exercer sur la bande (30) une force de plaquage contre le support (6), ladite force étant transversale par rapport à la direction longitudinale,
dans lequel
les moyens d'appui (10) et/ou le support (6) sont conformés pour occuper une portion seulement de la longueur de la bande (30) suivant la direction longitudinale, et
les moyens d'appui (10) sont agencés de façon à pouvoir passer d'un état fermé dans lequel les moyens d'appui (10) plaquent la bande (30) contre le support (6), à un état ouvert permettant la dissociation d'avec la bande (30) en vue du retrait ou de l'installation de la bande (30) du/dans le dispositif de transmission de courant.

2. Dispositif de transmission de courant électrique (100) selon la revendication 1, comprenant en outre la bande (30), et dans lequel la bande (30) comporte des moyens de renfort mécanique de la bande (7, 17).

3. Dispositif (100) selon la revendication 2, dans lequel les moyens de renfort mécanique de la bande (7, 17) comprennent au moins une partie (7) réalisée en au moins un matériau composite.

4. Dispositif (100) selon la revendication 3, dans lequel le matériau composite comprend des fibres de carbone et/ou des fibres de verre.

5. Dispositif (100) selon l'une des revendications 2 à 4, dans lequel au moins certains des moyens de renfort mécanique (7) sont disposés sur le fond de la bande ainsi que sur deux côtés latéraux de la bande (30).

6. Dispositif selon l'une des revendications 1 à 5, dans lequel les moyens d'appui (10) comprennent ou sont conformés pour coopérer avec un outil comprenant un excentrique (51).

7. Dispositif selon l'une des revendications 1 à 6, dans lequel les moyens d'appui (10) comprennent ou sont conformés pour coopérer avec un outil comprenant une sauterelle (51).

8. Dispositif (100) selon l'une des revendications 1 à 7, dans lequel les moyens d'appui (10) comprennent deux mors (1, 3) aptes à être disposés de part et d'autre de la bande (30) et conformés pour plaquer la bande (30) contre le support (6).

9. Dispositif (100) selon l'une des revendications 1 à 8, dans lequel les moyens d'appui (10) comprennent des moyens élastiques (8) pour exercer la force de plaquage contre le support (6).

10. Outil (50 ; 74) agencé pour coopérer avec le dispositif de transmission de courant électrique (100) selon l'une quelconque des revendications 1 à 9.

11. Système de pantographe ou de patin comprenant un dispositif de transmission (100) selon l'une des revendications 1 à 9.

12. Procédé d'installation/désinstallation d'une bande (30) comprenant du carbone pour un dispositif de transmission de courant électrique entre deux éléments mobiles l'un par rapport à l'autre, ladite bande s'étendant suivant une direction longitudinale et étant conçue pour frotter contre l'un desdits éléments de façon à transmettre du courant électrique, le procédé comprenant
une étape de retrait/positionnement par rapport à des moyens d'appui (10) agencés pour exercer sur la bande (30) une force de plaquage contre un support (6), ladite force étant transversale par rapport à la direction longitudinale, ledits moyens d'appui étant agencés de façon à pouvoir passer d'un état fermé dans lequel les moyens d'appui plaquent la bande contre le support, à un état ouvert permettant la dissociation d'avec la bande,
dans lequel les moyens d'appui (10) et le support (6) sont conformés pour occuper une portion seulement de la longueur de la bande (30) suivant la direction longitudinale.

## Patentansprüche

1. Vorrichtung zur Übertragung von elektrischem Strom (100) zwischen zwei zueinander bewegbaren Elementen mittels eines Karbon umfassenden Streifens (30), der sich in einer Längsrichtung erstreckt und ausgebildet ist, um an einem der Elemente derart zu reiben, dass elektrischer Strom übertragen wird, wobei die Übertragungsvorrichtung umfasst:
einen Streifenhalter (6),
Stützmittel (10), die ausgebildet sind, um auf den Streifen (30) eine Andrückkraft gegen den Halter (6) auszuüben, wobei die Kraft im Verhältnis zur Längsrichtung transversal ist,
wobei
die Stützmittel (10) und/oder der Halter (6) ausgebildet sind, um nur einen Abschnitt der Länge des Streifens (30) gemäß der Längsrichtung zu belegen, und
die Stützmittel (10) derart ausgebildet sind, dass sie aus einem geschlossenen Zustand, in welchem die Stützmittel (10) den Streifen (30) gegen den Halter (6) drücken, in einen geöffneten Zustand, welcher das Lösen vom Streifen (30) zwecks Demontage oder Montage des Streifens (30) von/in der Stromübertragungsvorrichtung erlaubt, wechseln können.

2. Vorrichtung zur Übertragung von elektrischem Strom (100) nach Anspruch 1, umfassend ferner den Streifen (30), und wobei der Streifen (30) Mittel zur mechanischen Verstärkung des Streifens (7, 17) aufweist.

3. Vorrichtung (100) nach Anspruch 2, wobei die Mittel zur mechanischen Verstärkung des Streifens (7, 17) mindestens einen Teil (7) umfassen, der aus mindestens einem Verbundmaterial hergestellt ist.

4. Vorrichtung (100) nach Anspruch 3, wobei das Verbundmaterial Karbonfasern und/oder Glasfasern umfasst.

5. Vorrichtung (100) nach einem der Ansprüche 2 bis 4, wobei mindestens einige der Mittel zur mechanischen Verstärkung (7) auf dem Boden des Streifens sowie auf den zwei seitlichen Seiten des Streifens (30) angeordnet sind.

6. Vorrichtung nach einem der Ansprüche 1 bis 5, wobei die Stützmittel (10) umfassen oder ausgebildet sind, um mit einem Werkzeug zusammenzuwirken, welches einen Exzenter (51) umfasst.

7. Vorrichtung nach einem der Ansprüche 1 bis 6, wobei die Stützmittel (10) umfassen oder ausgebildet sind, um mit einem Werkzeug zusammenzuwirken, welches einen Schnellverschluss (51) umfasst.

8. Vorrichtung (100) nach einem der Ansprüche 1 bis 7, wobei die Stützmittel (10) zwei Backen (1, 3) umfassen, die imstande sind, beiderseits des Streifens (30) angeordnet und ausgebildet zu sein, um den Streifen (30) gegen den Halter (6) zu drücken.

9. Vorrichtung (100) nach einem der Ansprüche 1 bis 8, wobei die Stützmittel (10) elastische Mittel (8) umfassen, um die Andrückkraft gegen den Halter (6) auszuüben.

10. Werkzeug (50; 74), das ausgebildet ist, um mit der Vorrichtung zur Übertragung von elektrischem Strom (100) nach einem der Ansprüche 1 bis 9 zusammenzuwirken.

11. Stromabnehmer- oder Gleitstücksystem, umfassend eine Übertragungsvorrichtung (100) nach einem der Ansprüche 1 bis 9.

12. Verfahren zur Montage/Demontage eines Karbon umfassenden Streifens (30) für eine Vorrichtung zur Übertragung von elektrischem Strom zwischen zwei zueinander bewegbaren Elementen, wobei sich der Streifen in einer Längsrichtung erstreckt und ausgebildet ist, um an einem der Elemente derart zu reiben, dass elektrischer Strom übertragen wird, wobei das Verfahren umfasst:
einen Schritt der Demontage/Montage in Bezug zu Stützmitteln (10), die ausgebildet sind, um auf den Streifen (30) eine Andrückkraft gegen einen Halter (6) auszuüben, wobei die Kraft in Bezug zu der Längsrichtung transversal ist, wobei die Stützmittel derart ausgebildet sind, dass sie aus einem geschlossenen Zustand, in welchem die Stützmittel den Streifen gegen den Halter drücken, in einen geöffneten Zustand, welcher das Lösen vom Streifen erlaubt, wechseln können,
wobei die die Stützmittel (10) und der Halter (6) ausgebildet sind, um nur einen Abschnitt der Länge des Streifens (30) gemäß der Längsrichtung zu belegen.

## Claims

1. A device (100) for transmission of electrical current between two elements mobile relative to each other, by means of a strip (30) containing carbon, extending in a longitudinal direction and designed to rub against one of said elements so as to transmit the electrical current, said transmission device including:
a strip support (6) and
bearing means (10) adapted to exert on the strip (30) a force pressing it against the support (6), said force being transverse relative to the longitudinal direction,
wherein the bearing means (10) and/or the support (6) are conformed to occupy only a longitudinal portion of the length of the strip (30), and
the bearing means (10) are adapted to be able to change from a closed state in which the bearing means (10) press the strip (30) against the support (6) to an open state enabling dissociation from the strip (30) for removing or installing the strip from/in the current transmission device.

2. The electrical current transmission device (100) as claimed in claim 1, further including the strip (30) and wherein the strip (30) includes means (7, 17) for mechanical reinforcement of the strip.

3. The device (100) as claimed in claim 2, wherein the means (7, 17) for mechanical reinforcement of the strip include at least one portion (7) produced in at least one composite material.

4. The device (100) as claimed in claim 3, wherein the composite material includes carbon fibers and/or glass fibers.

5. The device (100) as claimed in any one of claims 2 to 4, wherein at least some of the mechanical reinforcement means (7) are disposed on the back of the strip and on two lateral sides of the strip (30).

6. The device as claimed in any one of claims 1 to 5, wherein the bearing means (10) include or are conformed to cooperate with a tool including an eccentric (51).

7. The device as claimed in any one of claims 1 to 6, wherein the bearing means (10) include or are conformed to cooperate with a tool including a toggle clamp (51).

8. The device (100) as claimed in any one of claims 1 to 7, wherein the bearing means (10) include two jaws (1, 3) adapted to be disposed on either side of the strip (30) and conformed to press the strip (30) against the support (6).

9. The device (100) as claimed in any one of claims 1 to 8, wherein the bearing means (10) include elastic means (8) for exerting the force pressing against the support (6).

10. A tool (50; 74) adapted to cooperate with the electrical current transmission device (100) as claimed in any one of claims 1 to 9.

11. A pantograph or shoe system including a transmission device (100) as claimed in any one of claims 1 to 9.

12. A method for installing/uninstalling a carbon-containing strip (30) for a device for transmission of electrical current between two elements mobile relative to each other, said strip extending in a longitudinal direction and being designed to rub against one of said elements so as to transmit the electrical current, the method including
a step of withdrawing/positioning relatively to bearing means (10) adapted to exert on the strip (30) a force pressing it against a support (6), said force being transverse relative to the longitudinal direction, said bearing means (10) being adapted to be able to change from a closed state in which the bearing means (10) press the strip (30) against the support (6) to an open state enabling dissociation from the strip (30),
wherein the bearing means (10) and the support (6) are conformed to occupy only a longitudinal portion of the length of the strip (30).
